# EUROPÄISCHE PATENTSCHRIFT

(11) **EP 1 375 270 B1**
(45) Veröffentlichungstag und Bekanntmachung des Hinweises auf die Patenterteilung: **14.02.2007**
(21) Anmeldenummer: 03002435.0
(22) Anmeldetag: 05.02.2003
(51) Int. Cl.: B60S 1/04

(54) **Scheibenwischvorrichtung, insbesondere für ein Kraftfahrzeug**
Windscreen wiper device, in particular for a vehicle
Dispositif d'essuie-glace, en particulier pour un véhicule

(30) Priorität: 28.06.2002 DE 10229196
(43) Veröffentlichungstag der Anmeldung: 02.01.2004
(73) Patentinhaber: ROBERT BOSCH GMBH, 70442 Stuttgart (DE)
(72) Erfinder: Kraus, Achim, 77815 Buehl (DE); Weigold, Thomas, 76532 Baden-Baden (DE); Fleischer, Claus, 77815 Buehl (DE)

(56) Entgegenhaltungen:
- DE-A- 3 209 278
- PATENT ABSTRACTS OF JAPAN Bd. 1999, Nr. 03, 31. März 1999 (1999-03-31) -& JP 10 329658 A (NISSAN MOTOR CO LTD), 15. Dezember 1998 (1998-12-15)
- PATENT ABSTRACTS OF JAPAN Bd. 1998, Nr. 11, 30. September 1998 (1998-09-30) -& JP 10 167021 A (NISSAN MOTOR CO LTD), 23. Juni 1998 (1998-06-23)

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreichen Scheibenwischvorrichtungen für Kraftfahrzeuge bekannt, die ein Antriebsaggregat aufweisen, welches mittels eines Entkopplungselementes an der Karosserie des Kraftfahrzeuges befestigt ist. Bei derartigen Scheibenwischvorrichtungen weist das Antriebsaggregat Befestigungsöffnungen auf, die üblicherweise als Augen bezeichnet werden. Diese sind von Gummimuffen als Entkopplungselemente umschlossen. Das Antriebsaggregat wird mittels Schrauben, die durch die Augen gezogen sind, an der Karosserie des Kraftfahrzeugs befestigt.

Weiterhin ist bekannt, an der Karosserie Gewindestangen zu befestigen, auf die das Antriebsaggregat aufgesteckt ist und mittels entsprechender Muttern gesichert wird.

Bei derartigen Scheibenwischvorrichtungen ist jedoch ein hoher Aufwand bei der Auslegung notwendig, da die Augen des Antriebsaggregats und die Befestigungspunkte im Kraftfahrzeug fahrzeugspezifisch sehr unterschiedlich sind. Dadurch ist die Montage der Scheibenwischvorrichtung im Kraftfahrzeug sehr komplex und die Applikation auf das jeweilige Fahrzeug sehr aufwändig.

Weiters ist aus der DE-A-32 09 278 eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass am Antriebsaggregat ein Stutzen vorgesehen ist, der in das Entkopplungselement einführbar ist. Auf diese Weise wird die Anzahl der Teile bei der Montage der Scheibenwischvorrichtung reduziert und die Voraussetzung für einen standardisierten Antrieb geschaffen. Der Stutzen weist Nasen auf, die mit Aussparungen des Entkopplungselementes derart zusammenwirken, dass eine formschlüssige Verbindung entsteht. Dies erhöht die Stabilität und die Drehmomentenabstützung der Befestigung. Weiterhin kann auf diese Weise die Positionierung des Antriebs im Fahrzeug vereinfacht und die Geräuschentkopplung verbessert werden. Darüber hinaus kann so eine einheitliche Schnittstelle für eine Vielzahl von Fahrzeugtypen geschaffen werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Antriebsaggregat eine Abtriebswelle aufweist, die das Entkopplungselement in montierter Lage durchgreift. Auf diese Weise sind keine weiteren Gewindestangen oder Bohrungen in der Karosserie erförderlich, die fahrzeugspezifisch angepasst werden müssen.

Eine besonders einfache Realisierung wird dadurch erreicht, dass der Stutzen die Abtriebswelle radial umfasst. Eine besonders gute Drehmomentenabstützung wird durch eine asymmetrische Ausbildung des Stutzens erzielt.

Eine besonders vorteilhafte Ausführung kann durch eine Spannplatte erzielt werden, die auf einer Stirnseite des Stutzens befestigbar ist. Das Antriebsaggregat ist auf diese Weise besonders stabil an der Fahrzeugkarosserie befestigbar.

Die Entkopplung und damit die Dämpfung ist besonders ausgeprägt, wenn das Entkopplungselement zwischen Stutzen und Spannplatte angeordnet ist. Weiter verbessert wird dies durch ein festes Einklemmen des Entkopplungselements zwischen Spannplatte und Stutzen.

Wenn die Spannplatte Ausklinkungen aufweist, die mit weiteren Aussparungen des Entkopplungselementes zusammenwirken können, wird eine höhere Drehmomentenabstützung erzielt. Weiter verbessert wird die Befestigung dadurch, dass die Höhe des Stutzens kleiner als die Dicke des Entkopplungselementes ist. Darüber hinaus ergibt sich so eine verbesserte Geräuschentkopplung und eine kostenoptimierte Lösung.

In besonders einfacher Weise lässt sich die Spannplatte am Stutzen durch Anschrauben befestigen. Schweißen, Punktschweißen oder Nieten ist natürlich auch möglich.

Eine besonders genaue Positionierung kann dadurch erreicht werden, dass das Antriebsaggregat eine erste Zentrierhilfe aufweist, die mit einer zweiten Zentrierhilfe der Spannplatte zusammenwirkt.

### Zeichnungen

Ausführungsbeispiele der Erfindung sind in den Zeichnungen dargestellt und in der nachfolgenden Beschreibung näher erläutert. Es zeigen
Figur 1 eine schematische Darstellung einer erfindungsgemäßen Scheibenwischvorrichtung,
Figur 2 eine Variation der erfindungsgemäßen Scheibenwischvorrichtung aus Figur 1 und
Figur 3 eine schematische Draufsicht auf ein Antriebsaggregat aus Figur 2.

### Beschreibung des Ausführungsbeispiels

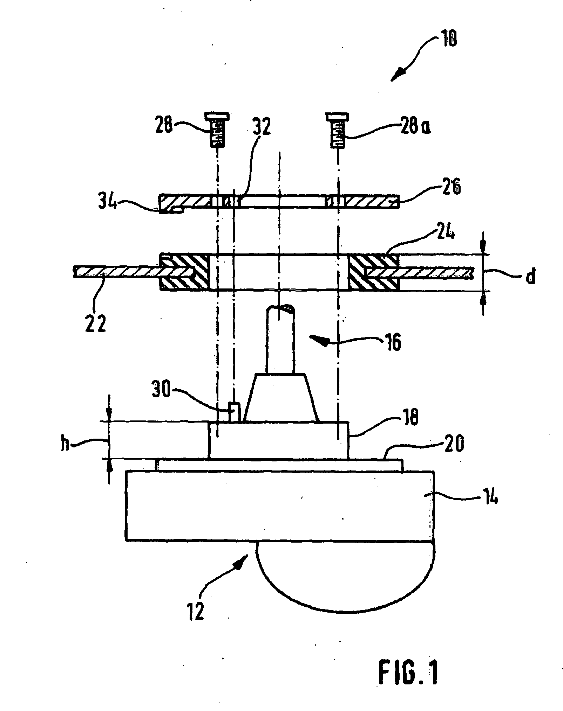

In Figur 1 ist eine erfindungsgemäße Scheibenwischvorrichtung 10 in einer schematischen Darstellung gezeigt. Diese umfasst ein Antriebsaggregat 12 mit einem Gehäuse 14, aus dem eine Abtriebswelle 16 ragt. Das Gehäuse 14 weist einen Stutzen 18 auf, der aus einer im wesentlichen ebenen Fläche 20 des Gehäuses 14 hervorragt. Die Abtriebswelle 16 ist dabei etwa im Zentrum des Antriebsaggregats 12 angeordnet und wird vom Stutzen 18 ringförmig umfasst. Am Karosserieblech 22 des Kraftfahrzeugs (nicht gezeichnet) ist ein Entkopplungselement 24 eingesetzt. Dieses Entkopplungselement 24 ist als Kreisring aus einem Elastomer, also beispielsweise aus Gummi ausgebildet, und entlang seiner äußeren Mantelfläche derart eingeschnitten, dass ein Rotationskörper mit einem im Querschnitt U-förmigen Profil entsteht. Das Entkopplungselement 24 ist in das Karosserieblech 22 eingesetzt, sodass das Blech in das Innere des U-förmigen Profils hineinragt. Die Dicke d des Entkopplungselements 24 ist dabei etwas größer als die Höhe h des Stutzens 18.

Zur endgültigen Befestigung ist auf der dem Antriebsaggregat 12 abgewandten Seite des Entkopplungselements 24 eine Spannplatte 26 angeordnet, die über eine Öffnung für die Abtriebswelle 16 verfügt und weiterhin zwei Bohrungen für zwei Schrauben 28, 28a aufweist, mit der die Spannplatte 26 am Stutzen 18 festgeschraubt werden kann. Zur genaueren Positionierung weist das Antriebsaggregat 12 eine erste Zentrierhilfe 30 auf, die als einfacher Zentrierstift ausgebildet ist. Mit diesem Stift 30 wirkt nun eine Bohrung 32 als zweite Zentrierhilfe zusammen, die in der Spannplatte 26 vorgesehen ist. Natürlich kann auch das Entkopplungselement 24 über eine derartige Zentrierhilfe verfügen, die in Kombination auch mit der ersten oder zweiten Zentrierhilfe 30, 32 zusammenwirken kann. Zur Verbesserung der Drehmomentenstabilität ist an der Spannplatte 26 eine Ausklinkung 34 vorgesehen, die sich, in montiertem Zustand, in das Entkopplungselement 24 hineindrückt und auf diese Weise die Drehmomentenübertragung verbessert.

An der Abtriebswelle 16 ist dann ein Scheibenwischerarm wirkverbunden, der ein Wischblatt trägt . Dies ist in der Figur der Übersichtlichkeit wegen weggelassen.

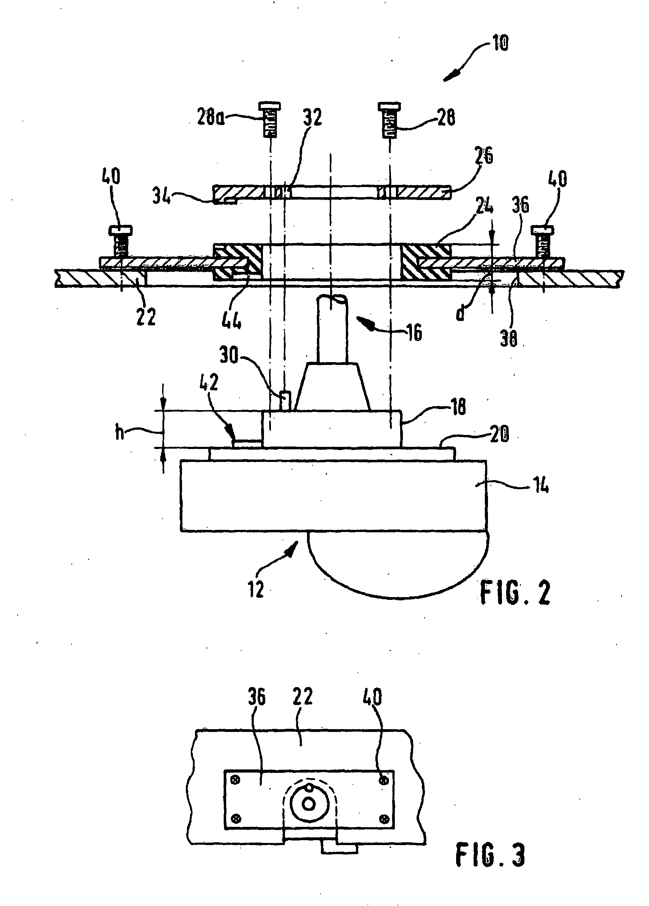

In Figur 2 ist eine Variation der erfindungsgemäßen Scheibenwischvorrichtung 10 nach Figur 1 dargestellt. Das Antriebsaggregat 12 mit dem Gehäuse 14, dem Stutzen 18 und der Abtriebswelle 16 sind wieder in das Entkopplungselement 24 eingefügt. Das Entkopplungselement 24 wird jedoch nicht vom Karosserieblech 22 getragen, sondern ist in ein Trägerelement 36 eingesetzt. Dieses Trägerelement 36 kann ein einfaches Blechstück sein oder kann auch als Kunststoffteil einstückig mit dem Entkopplungselement ausgebildet sein. Natürlich ist auch eine separate Ausbildung aus zwei Kunststoffteilen denkbar. Das Trägerelement 36 ist mit dem Karosserieblech 22 verbunden, was beispielsweise als Schraub-, Niet- oder Schweißverbindung realisiert sein kann. Selbstverständlich sind auch Kombinationen der in Figur 1 und Figur 2 dargestellten Varianten möglich.

In Figur 3 ist die erfindungsgemäße Scheibenwischvorrichtung aus Figur 2 in einer Draufsicht dargestellt. Das Karosserieblech 22 weist eine U-förmige Aussparung 38 auf, in die das Trägerelement 36 eingesetzt ist. Das Trägerelement ist mittels einer Schraubverbindung 40 am Karosserieblech 22 befestigt. Nicht gezeichnet ist in dieser Darstellung, wie auch in den Figuren 1 und 2, der Wischerarm mit dem Wischblatt, das zumindest mittelbar mit der Abtriebswelle 16 in Wirkverbindung steht.

Der Stutzen 18 kann beispielsweise auch Nasen 42 aufweisen, die mit Aussparungen 44 des Entkopplungselementes 24 zusammenwirken und so die Drehmomentenstabilität der Scheibenwischvorrichtung verbessern. Dies kann auch durch eine asymmetrische Ausbildung des Stutzens 18 erzielt werden. So kann der Stutzen 18 beispielsweise ellipsenförmig, aber auch quadratisch oder achteckig ausgebildet sein; "asymmetrisch" ist hier im Sinne von nicht kreissymmetrisch zu verstehen. Dementsprechend ist natürlich auch das Entkopplungselement 24 geformt. In einer weiteren Variation ist es auch möglich, den Stutzen 18 beispielsweise sechs- oder achteckig auszubilden und in ein Entkopplungselement 24 einzufügen, dessen Innenform zylindrisch und damit kreisrund ist.

## Patentansprüche

1. Scheibenwischvorrichtung, insbesondere für ein Kraftfahrzeug, mit einem Antriebsaggregat (12) und einem Entkopplungselement (24), wobei das Antriebsaggregat (12) ein Gehäuse (14) mit einem Stutzen (18) aufweist, der in das Entkopplungselement (24) einführbar ist, **dadurch gekennzeichnet, dass** der Stutzen (18) Nasen (42) aufweist, die in eingeführten Zustand mit Aussparungen (44) des Entkopplungselements (24) derart zusammenwirken, dass eine formschlüssige Verbindung entsteht.

2. Scheibenwischvorrichtung nach Anspruch 1, **dadurch gekennzeichnet, dass** das Antriebsaggregat (12) eine Abtriebswelle (16) aufweist, die das Entkopplungselement (24) in montierter Lage durchgreift.

3. Scheibenwischvorrichtung nach Anspruch 2, **dadurch gekennzeichnet, dass** der Stutzen (18) die Abtriebswelle (16) radial umfasst.

4. Scheibenwischvorrichtung nach einem der Ansprüche 2 oder 3, **dadurch gekennzeichnet, dass** der Stutzen (18) die Abtriebswelle (16) asymmetrisch umfasst.

5. Scheibenwischvorrichtung nach einem der vorhergehenden Ansprüche, **dadurch gekennzeichnet, dass** eine Spannplatte (26) vorgesehen ist, die auf einer Stirnseite des Stutzens (18) befestigbar ist.

6. Scheibenwischvorrichtung nach Anspruch 5, **dadurch gekennzeichnet, dass** das Entkopplungselement (24) zwischen Spannplatte (26) und Stutzen (18) angeordnet, insbesondere eingeklemmt ist.

7. Scheibenwischvorrichtung nach einem der Ansprüche 5 oder 6, **dadurch gekennzeichnet, dass** die Spannplatte (26) Ausklinkungen (34) aufweist die insbesondere mit weiteren Aussparungen (44) des Entkopplungselementes zusammenwirken.

8. Scheibenwischvorrichtung nach einem der vorhergehenden Ansprüche, **dadurch gekennzeichnet, dass** die Höhe des Stutzens (18) kleiner als die Dicke D des Entkopplungselementes (24) ist.

9. Scheibenwischvorrichtung nach einem der Ansprüche 5 oder 6, **dadurch gekennzeichnet, dass** die Spannplatte (26) am Stutzen (18) anschraubbar ist.

10. Scheibenwischvorrichtung nach einem der Ansprüche 5-7 oder 9, **dadurch gekennzeichnet, dass** am Antriebsaggregat (12) eine erste Zentrierhilfe (30) vorgesehen ist, die mit einer zweiten Zentrierhilfe (32) der Spannplatte (26) zusammenwirkt.

## Claims

1. Windscreen wiper device, in particular for a motor vehicle, with a drive unit (12) and a decoupling element (24), the drive unit (12) having a housing (14) with a connecting piece (18) which can be inserted into the decoupling element (24), **characterized in that** the connecting piece (18) has lugs (42) which, in the inserted state, interact with cut-outs (44) of the decoupling element (24) in such a manner that an interlocking connection arises.

2. Windscreen wiper device according to Claim 1, **characterized in that** the drive unit (12) has an output shaft (16) which, in the fitted state, reaches through the decoupling element (24).

3. Windscreen wiper device according to Claim 2, **characterized in that** the connecting piece (18) surrounds the output shaft (16) radially.

4. Windscreen wiper device according to either of Claims 2 and 3, **characterized in that** the connecting piece (18) surrounds the output shaft (16) asymmetrically.

5. Windscreen wiper device according to one of the preceding claims, **characterized in that** a clamping plate (26) is provided which can be fastened on an end side of the connecting piece (18).

6. Windscreen wiper device according to Claim 5, **characterized in that** the decoupling element (24) is arranged, in particular clamped, between clamping plate (26) and connecting piece (18).

7. Windscreen wiper device according to either of Claims 5 and 6, **characterized in that** the clamping plate (26) has release means (34) which interact in particular with further cut-outs (44) of the decoupling element.

8. Windscreen wiper device according to one of the preceding claims, **characterized in that** the height of the connecting piece (18) is smaller than the thickness D of the decoupling element (24).

9. Windscreen wiper device according to either of Claims 5 and 6, **characterized in that** the clamping plate (26) can be screwed onto the connecting piece (18).

10. Windscreen wiper device according to one of Claims 5 - 7 or 9, **characterized in that** a first centring aid (30) is provided on the drive unit (12) and interacts with a second centring aid (32) of the clamping plate (26).

## Revendications

1. Dispositif d'essuie-glace, notamment de véhicule automobile, comportant une unité d'entraînement (12) et un élément de découplage (24), l'unité d'entraînement (12) ayant un boîtier (14) muni d'un embout (18) qui s'introduit dans l'élément de découplage (24),
**caractérisé en ce que**
l'embout (18) comporte des becs (42) qui, à l'état assemblé, coopèrent avec des dégagements (44) de l'élément de découplage (24) pour réaliser une liaison par la forme.

2. Dispositif d'essuie-glace selon la revendication 1,
**caractérisé en ce que**
l'unité d'entraînement (2) comporte un arbre de sortie (16) qui traverse l'élément de découplage (24) à l'état monté.

3. Dispositif d'essuie-glace selon la revendication 2,
**caractérisé en ce que**
l'embout (18) entoure radialement l'arbre de sortie (16).

4. Dispositif d'essuie-glace selon l'une des revendications 2 ou 3,
**caractérisé en ce que**
l'embout (18) entoure l'arbre de sortie (16) de manière asymétrique.

5. Dispositif d'essuie-glace selon l'une quelconque des revendications précédentes,
**caractérisé par**
une plaque de serrage (26) fixée sur la face frontale de l'embout (18).

6. Dispositif d'essuie-glace selon la revendication 5,
**caractérisé en ce que**
l'élément de découplage (24) est disposé notamment enserré entre la plaque de serrage (26) et l'embout (18).

7. Dispositif d'essuie-glace selon l'une des revendications 5 ou 6,
**caractérisé en ce que**
la plaque de serrage (26) comporte des déformations (34) coopérant notamment avec d'autres dégagements (44) de l'élément de découplage.

8. Dispositif d'essuie-glace selon l'une des revendications précédentes,
**caractérisé en ce que**
la hauteur de l'embout (18) est inférieure à l'épaisseur D de l'élément de découplage (24).

9. Dispositif d'essuie-glace selon l'une des revendications 5 ou 6,
**caractérisé en ce que**
la plaque de serrage (26) est vissée à l'embout (18).

10. Dispositif d'essuie-glace selon l'une des revendications 5-7 ou 9,
**caractérisé en ce que**
l'unité d'entraînement (12) comporte un premier élément de centrage (30) coopérant avec un second élément de centrage (32) de la plaque de serrage (26).
